# EUROPÄISCHE PATENTSCHRIFT

(11) **EP 0 941 669 B1**
(45) Veröffentlichungstag und Bekanntmachung des Hinweises auf die Patenterteilung: **19.11.2003**
(21) Anmeldenummer: 97934814.1
(22) Anmeldetag: 23.07.1997
(51) Int. Cl.: A23G 9/02

(54) **MISCHUNG ZUR BEREITUNG VON EISCREME**
MIXTURE FOR THE PREPARATION OF ICE-CREAM
MELANGE DESTINE A LA PREPARATION DE GLACES

(30) Priorität: 02.12.1996 RU 96122896
(43) Veröffentlichungstag der Anmeldung: 15.09.1999
(73) Patentinhaber: Gutkevich, Evgeny Anatolievich, Tomsk, 634012 (RU)
(72) Erfinder: Gutkevich, Evgeny Anatolievich, Tomsk, 634012 (RU)
(74) Vertreter: Petersen, Frank, Dipl.-Ing.
(86) Internationale Anmeldenummer: RU9700232
(87) Internationale Veröffentlichungsnummer: WO98024326

(56) Entgegenhaltungen:
- EP-A- 0 240 326
- EP-A- 0 242 056
- EP-A- 0 438 201
- WO-A-96/08261
- WO-A-98/09535
- SU-A- 1 750 601
- US-A- 4 427 701
- HEKMATS. ; MCMAHON D.: "Survival of Lactobacillus acidophilus and Bifidobacterium bifidum in ice cream for use as a probiotic food." JOURNAL OF DAIRY SCIENCE, Bd. 75, Nr. 6, 1992, Seiten 1415-1422, XP002136021
- CHRISTIANSEN P S ET AL: "SOME PROPERTIES OF ICE CREAM CONTAINING BIFIDOBACTERIUM BIFIDUM ANDLACTOBACILLUS ACIDOPHILUS" MILCHWISSENSCHAFT,DE,VV GMBH VOLKSWIRTSCHAFTLICHER VERLAG. MUNCHEN, Bd. 51, Nr. 9, 1. Januar 1996 (1996-01-01), Seiten 502-504, XP000632258 ISSN: 0026-3788
- VRESE DE M: "PROBIOTIKA - EINE OPTION FUER SIE SUESSWARENINDUSTRIE?" DMZ. LEBENSMITTELINDUSTRIE UND MILCHWISSENSCHAFT,DE,VOLKSWIRTSCHAFTL ICHER VERLAG GMBH. MUNCHEN, Bd. 118, Nr. 12, 19. Juni 1997 (1997-06-19), Seiten 500,502-508, XP000656503 ISSN: 0938-9369
- DAVIDE C.: "Probiotic and value added dairy products for health and sickness" PHILIPPINE AGRICULTURIST, Bd. 78, Nr. 1, 1995, Seiten 31-42, XP002136022
- GUTKNECHT K.: "microbes confer healthful benefits on ice cream and yogurt" UTAH SCIENCE, Bd. 52, Nr. 4, 1992, Seiten 134-135, XP002136023
- FSTA-DATABASE: BUNDESGESUNDHEITSAMT, GERMANY, ISBN 90-277-2331-1: "Analysis of foods. Determination of bacterial count in ice cream. Pour-plate method. (This method replaces the method issued 1993, the field of application having been widened to cover milk-based infant foods as well as ice cream and ice cream powder)", AMTLICHE SAMMLUNG VON UNTERSUCHUNGSVERFAHREN NACH PARAGRAPH 35 LMBG, BERLIN, BEUTH VERLAG GMBH, 1987, Band L42.00-2, Nr. , Seiten ABSTR. -
- DATABASE FSTA, IFIS, FSTA Nr. 96-1-08-P0128, HONG, S.M.: "Effect on the texture and flavor of frozen joghurt by mixed strain culture", 1995

## Beschreibung

### Gebiet der Technik

Die vorliegende Erfindung bezieht sich auf die milchverarbeitende Industrie und betrifft insbesondere eine Mischung zur Zubereitung von Speiseeis.

### Zugrundeliegender Stand der Technik

Es ist eine Vielzahl von Speiseeisarten bekannt, die sich durch einen verschiedenen Gehalt an Komponenten auszeichnen, darunter an Fetten, Aromastoffen, Süssungsmitteln, Füllstoffen u.s.w.

Jede Art von Speiseeis besitzt eigentümliche Schmackhaftigkeit und Gebrauchseigenschaften in Abhängigkeit von einer konkreten Zusammensetzung von im Speiseeis enthaltenen Komponenten.

Beispielsweise ist bekannt ein Speiseeis (technologische Anweisung für die Herstellung von Speiseeis, Moskau, «VO Agropromizdat», 1988, S.11, 114, 116), das ein Milchsubstrat, Milchsäure-Mikroorganismen Str. Citrovorus, Str. dextanicus, Str. cremoris und Obst- und Beeren-Füllstoffe enthält. Weiterhin ist die Verwendung von getrocknetem Foghurtpulver, welches lebensfähige Mikroorganismen enthält, als Zutat zu trockenen Foghurteiskrememischungen bekannt (EP 0240 326).

Das Hauptziel der Anwendung dieser Mikroorganismen ist die Fermentation des Milchsubstrats und die Herstellung eines Sauermilchproduktes, welches neben einem eigentümlichen Fruchtgeschmack des Speiseeises eine Verbesserung der Verdauung gewährleistet.

Jedoch weisen die genannten Milchsäure-Mikroorganismen eine begrenzte biologische Aktivität auf und üben eine kurzzeitige positive Wirkung auf den menschlichen Organismus aus, da sie beim Gelangen in den Magen-Darm-Kanal in der Regel schnell eingehen.

Um probiotische Mikroorganismen unbeschadet in den Bereich des Magen-Darm-Kanals zu befördern, ohne dass sie eingehen, wird in der WO 96/08261 vorgeschlagen, Stärke unterschiedlicher Modifikationen, verschiedener Herkunft und in verschiedenen Kombinationen zu verwenden, die als Träger von probiotischen Mikroorganismen dient. Hier wirkt Stärke als Grundlage des Wachstums und als Kulturmedium von probiotischen Mikroorganismen.

In dem Artikel Gutknecht K.: "Microbes Confer Healthful Benefits on Ice Cream and Yogurt", Utah Science, Bd. 52, Nr. 4, 1992, Seiten 134 bis 135 wird generell offenbart, probiotische Mikroorganismen in Eiscreme zu verarbeiten.

In Bundesgesundheitsamt, Germany: "Analysis of Foods. Determination of Bacterial Count in Ice Cream. Pour-Plate Method", Amtliche Sammlung von Untersuchungsverfahren nach § 35 LMBG, Berlin, Beuth Verlag GmbH, 1987, Band L42.00-2 werden Verfahren offenbart, um die Anzahl von Bakterien in Eiscreme zu zählen.

### Offenbarung der Erfindung

Der Erfindung liegt die Aufgabe zugrunde, eine Zusammensetzung zur Zubereitung von Speiseeis mit solchen Komponenten zu schaffen, die gemeinsam mit der eigentümlichen Schmackhaftigkeit des Speiseeises eine Erhöhung seiner biologischen Aktivität und seiner Nützlichkeit für den menschlichen Organismus sicherstellen.

Diese Aufgabe ist durch Schaffung einer Mischung zur Zubereitung von Speiseeis gelöst, die folgende Komponenten enthält: ein Milchsubstrat, ein Süssungsmittel, ein Stabilisierungsmittel und Mikroorganismen, die erfindungsgemäss als probiotische Mikroorganismen in lyophilisierter Form enthalten sind.

Probiotische Mikroorganismen sind Gruppen von Mikroorganismen, welche imstande sind, im Organismus des Menschen zu existieren und dessen Gesundheit durch Teilnahme an seinem Metabolismus positiv zu beeinflussen.

Zum Unterschied von Milchsäurebakterien, die zur Fermentation der Milch und Herstellung eines Sauermilchproduktes eingesetzt werden, beginnen die probiotischen Mikroorganismen, indem sie in den menschlichen Organismus gelangen, sich zu vermehren, wobei sie eine positive Wirkung auf den menschlichen Organismus ausüben und die Schmackhaftigkeit des Speiseeises nicht beeinträchtigen.

Das Vorhandensein der probiotischen Mikroorganismen im Speiseeis steigert dessen biologische Aktivität und gestattet es, die Anziehungskraft und die Schmacknaftigkeit des Speiseeises mit der heilend-vorbeugenden Wirkung dieser Mikroorganismen auf den menschlichen Organismus harmonisch zu vereinen.

Der heilend-vorbeugende Effekt der probiotischen Mikroorganismen ist mit ihrer Wirkung im duodendalen Darmabschnitt, im Dick- und Dünndarmabschnitt (Duodenum, Ileum, Cecum, Rectum) des Menschen verbunden, wo sie sich vermehren und beginnen, sich am Metabolismus des menschlichen Organismus nach drei bis fünf Stunden seit dem Moment ihres Gelangens in den Organismus zu beteiligen, wobei sie eine maximale Aktivität nach Verlauf von drei bis fünf Stunden erreichen (T.Mitsuoka, 1978) erreichen. Dabei liegt die Dauer der maximalen Aktivität der probiotischen Mikroorganismen in einem Zeitintervall von 24 bis 72 Stunden.

Wie im vorstehenden erwähnt, ist der heilend-vorbeugende Effekt der probiotischen Mikroorganismen durch ihre Beteiligung am Metabolismus des menschlichen Organismus gegeben. Dies stimuliert das Immunsystem, senkt den Cholesteringehalt im Blut, inhibiert die Entwicklung der pathogenen Darmmikroflora, synthetisiert Vitamine, beeinflusst positiv die Darmmikroflora, vergrössert die Absorption von Kalzium und verbessert die Verdaulichkeit der Nahrung.

Es ist zweckmässig, dass die erfindungsgemäss vorgeschlagene Mischung die genannten Komponenten bei deren folgendem Verhältnis in Masse-% enthält:

| | |
|---|---|
| probiotische Mikroorganismen | von 0,01 bis 10,0 |
| Stabilisierungsmittel | von 0,4 bis 5,0 |
| Süssungsmittel | von 0,5 bis 20,0 |
| Milchsubstrat | alles übrige. |

Die gennante Menge an Komponenten bietet die Möglichkeit, sowohl eine trockenen Mischung für die Zubereitung von Speiseeis als auch eine «nasse» Mischung zu erhalten.

Die trockene Mischung ist einfach in der Herstellung, ist leicht und lange Zeit lagerbar, in der Verpackung gedrungen, sie ist zweckmässigerweise zum Transport in entlegene Gebiete anzuwenden.

Die «nasse» Mischung ist deshalb gut, weil das Speiseeis in fertiger Form für den Verzehr und die schnelle Realisierung hergestellt wird.

Es ist erwünscht, dass die erfindungsgemässe Mischung zusätzlich Wasser beinhaltet und dass sie als Milchsubstrat entrahmte Trockenmilch und Vollmilch bei folgendem Komponentenverhältnis in Masse-% enthält:

| | |
|---|---|
| entrahmte Trockenmilch | von 8,0 bis 20,0 |
| Vollmilch | von 30,0 bis 44,0 |
| Süssungsmittel | von 0,5 bis 20,0 |
| Stabilisierungsmittel | von 0,4 bis 5,0 |
| probiotische Mikroorganismen | von 0,001 bis 10,0 |
| Wasser | alles übrige. |

Das Vorhandensein der genannten Komponenten in diesem Verhältnis derselben erlaubt es, ein Speiseeis des breitesten Geschmacksspektrums bei der vorstehend beschriebenen Nützlichkeit des besagten Erzeugnisses zu erhalten.

Es ist günstig, dass die erfindungsgemässe Mischung zusätzlich einen Säurewecker für Joghurt bei dem folgenden Komponentenverhaltnis in Masse-% enthält:

| | |
|---|---|
| entrahmte Trockermilch | von 8,0 bis 20,0 |
| Vollmilch | von 40,0 bis 44,0 |
| Süssungsmittel | von 0,5 bis 20,0 |
| Stabilisierungsmittel | von 0,4 bis 5,0 |
| probiotische Mikroorganismen | von 0,001 bis 3,4 |
| Säurewecker für Joghurt | von 1,0 bis 4,0 |
| Wasser | alles übrige. |

Das Vorhandensein des Säureweckers für Joghurt bei dem angegebenen Komponentenverhältnis gibt die Möglichkeit, den vorbeschriebenen, von den vorhandenen Milchsäurebakterien herrührenden positiven Effekt auszunutzen, das heisst die Schmackhaftigekeit des Speiseeises mit den Eigenschaften des Sauermilchproduktes zu ergänzen.

Es ist zweckmässig, dass die Mischung als probiotische Mikroorganismen die folgenden Gruppen dieser Mikroorganismen enthält:
Laktobazillen azidiphilus (Lb acidophilus)
Laktobazillen kasei (Lb casei)
Laktobazillen rhamnosus (Lb rhamnosus)
Enterokokken faekum (Ec faecium)
Bifidobakterium (Bifidumbacterium bifidum),
die einzeln oder in Kombination genommen sind.

Die angefuhrten Gruppen der probiotischen Mikroorganismen sind im Sinne ihrer biologisch aktiven Einwirkung auf den menschlichen Organismus am effektivsten von den bekannten probiotischen Mikroorganismen. Sie sind am vollständigsten beschrieben von T.Mitsuoka in «Intestinal bacteria and Health», 1978.

Somit gestattet die erfindungsgemässe Mischung zur Zubereitung von Speiseeis, neben der Gewährleistung der eigentümlichen Schmackhaftigkeit des Speiseeises dessen biologische Aktivität und Nützlichkeit für den menschlichen Organismus sicherzustellen.

### Beste Ausführungsform der Erfindung

Die erfindungsgemäss vorgeschlagene Mischung zur Zubereitung von Speiseeis enthält folgende Komponenten: Milchsubstrat, Süssungsmittel, Stabilisierungsmittel und probiotische Mikroorganismen in lyophilisierter Form.

Dabei kann die erfindungsgemässe Mischung die genannten Komponenten bei deren folgendem Verhältnis in Masse-% enthalten:

| | |
|---|---|
| probiotische Mikroorganismen | von 0,01 bis 10,0 |
| Stabilisierungsmittel | von 0,4 bis 5,0 |
| Süssungsmittel | von 0,5 bis 20,0 |
| Milchsubstrat | alles übrige. |

Ausserden kann diese Mischung zusätzlich Wasser beinhalten, und als Milchsubstrat kann sie entrahmte Trockenmilch und Vollmilch bei dem folgenden Komponentenverhältnis in Masse-% enthalten:

| | |
|---|---|
| entrahmte Trockenmilch | von 8,0 bis 20,0 |
| Vollmilch | von 30,0 bis 44,o |
| Süssungsmittel | von 0,5 bis 20,0 |
| Stabilisierungsmittel | von 0,4 bis 5,0 |
| probiotische Mikroorganismen | von 0,001 bis 10,0 |
| Wasser | alles übrige. |

Auch kann die Mischung zusätzlich einen Säurewecker für Joghurt bei dem folgenden , Komponentenverhältnis in Masse-% enthalten:

| | |
|---|---|
| entrahmte Trockenmilch | von 8,0 bis 20,0 |
| Vollmilch | von 40,0 bis 44,0 |
| Süssungsmittel | von 0,5 bis 20,0 |
| Stabilisierungsmittel | von 0,4 bis 5,0 |
| probiotische Mikroorganismen | von 0,001 bis 3,4 |
| Säurewecker für Joghurt | von 1,0 bis 4,0 |
| Wasser | alles übrige. |

Als probiotische Mikroorganismen kann die erfindungsgemässe Mischung die folgenden Gruppen dieser Mikroorganismen enthalten:
Laktobazillen azidophilus (Lb acidophilus)
Laktobazillen kasei (Lb casei)
Laktobazillen rhamnosus (Lb rhamnosus)
Enterokokken faekum (Ec faecium),
Bifidobakterium (Bifidumbacterium bifidum)
die einzeln oder in Kombination genommen sind.

Gemäss der Erfindung kann die vorgeschlagene Mischung zur Zubereitung von Speiseeis trocken und in Päckchen abgefüllt oder herkömmlich «nass» sein.

Die probiotischen Mikroorganismen werden der Mischung in lyophilisierter Form zugegeben und können in der trockenen Mischung in dieser Form bis zur Zubereitung von Speiseeis und dessen Verzehr aufbewahrt werden.

Im herkömmlichen «nassen» Speiseeis werden die lyophilisierten Mikroorganismen in der Regel vor der Freezerbehandlung und Härtung zugegeben.

In gefrorener Form behalten die probiotischen Mikroorganismen ebenso wie in der lyophilisierten Form ihre Lebensfähigkeit und Aktivität bis zum Verzehr des Speiseeises bei.

Die trockene und die «nasse» Mischung kann nach einem beliebigen bekannten Verfahren auf einer für unsere Zwecke geeigneten Ausrüstung zubereitet werden. Konkrete Technologievarianten sind weiter unten in konkreten Ausführungsbeispielen der Erfindung beschrieben.

Die erfindungsgemässe Mischung zur Zubereitung von Speiseeis kann beliebige Füllstoffe beinhalten, beispielsweise Aromastoffe, Früchte, Nüsse, Schokolade u.dgl.

Als Milch kann in Frage kommen: entrahmte Trockenmilch, Trocken-Vollmilch, Trockenmilch mit verschiedenem Fettgehalt, Trockensahne, Vollmilch mit einem beliebigen Fettgehalt, konzentrierte Milch, konzentrierte Sahne, Kondensmilch mit einem beliebigen Fettgehalt, eingedickte Sahne mit einem beliebigen Fettgehalt und eine beliebige andere Milch.

Die Milch als solche gibt dem Speiseeis eine vortreffliche Schmackhaftigkeit und Nutzstoffe, die in der Milch selbst enthalten sind.

Als Süssungsmittel können weit bekannte Stoffe wie Zucker, Aspartat Xylit oder ein beliebiges anderes bekanntes Süssungsmittel eingesetzt werden, von dessen Verwendung die Geschmacksqualität des Endproduktes abhängt.

Als Stabilisierungsmittel kann das Stabilisierungsmittel für Speiseeis PRO-QUICK der Firma TEWS, GmbH (Deutschland) effektiver zur Verwendung kommen. Es können jedoch auch beliebige andere Stabilisierungsmittel (z.B. Stärke) eingesetzt werden, die sich für diese Zwecke eignen. Ein Stabilisierungsmittel im Speiseeis verbessert seine Konsistenz.

Die Konsistenz des «nassen» Speiseeises wird durch die Menge der flüssigen Komponente (Wasser und/oder Vollmilch) reglementiert.

Das Vorhandensein des Säureweckers für Joghurt in der erfindungsgemässen Zusammensetzung ist zur Säuerung von Milch bestimmt. Als Säureweckers können Säureweckerarten des Instituts für milchverarbeitende Industrie (der Stadt Omsk), Säureweckerarten für Joghurt der Firma «Wiesby» und «CHR HANSEN» eingesetzt werden, es können jedoch auch beliebige andere, zur Säuerung von Milch verwendete Säureweckerarten zum Einsatz gelangen.

Die lyophilisierten Formen der vorstehend beschriebenen probiotischen Mikroorganismen werden von verschiedenen Firmen, im besonderen vom Tomsker Institut für Vakzinen und Seren sowie von den Firmen «Wisby» (Deutschland) und «CHR HANSEN» (Deutschland) hergestellt. Der von der Anwendung der probiotischen Mikroorganismen herrührende Effekt ist im vorstehenden beschrieben.

Zur Erreichung eines hohen Niveaus der biologischen Aktivität ist es zweckmäßig, dass das Produkt eine ausreichende Menge an probiotischen Mikroorganismen enthält. Dazu ist es wichtig, dass die Konzentration der probiotischen Zellen in der Mischung eine bis zwei therapeutische Dosen (etwa 1.10⁷ Zellen in 100 Gramm Produkt) beträgt; in diesem Fall wird eine maximale biologische Aktivität des Fertigproduktes erreicht.

Eine Überdosierung der probiotischen Zellen ist deshalb unmöglich, weil ein Teil der Zellen im Magen unter der Wirkung des Magensaftes eingeht; beim Gelangen in andere Abschnitte des Magen-Darm-Kanals beginnen die probiotischen Zellen sich zu vermehrten, wobei eine Selbstregelung der Geschwindigkeit und des Volumens der Vermehrung der probiotischen Zellen im Organismus vor sich geht, das heisst, im Organismus funktioniert eine solche Menge Zellen, die er im gegebenen Augenblick braucht (T. Mitsuoka, 1978 «Intestinal Bacterial and Health»).

Eine besonders optimale Konzentration der probiotischen Mikroorganismen ist vorstehend beschrieben. Bei einer Verringerung ihres Gehaltes unter 0,01 Masse-% werden in 100 Gramm Fertigprodukt weniger als etwa 10⁵ Zellen probiotischer Mikroorganismen anwesend sein, was die biologische Aktivität desselben herabsetzt. Bei einer Vergrösserung ihrer Konzentration über 10 Masse-% werden in 100 Gramm Fertigprodukt etwa 10⁸ Zellen probiotischer Mikroorganismen anwesend sein, was die Schmackhaftigkeit des Fertigproduktes negativ beeinflussen kann.

Die Menge des Süssungsmittels wird durch die Genuss-Anziehungskraft des Produktes reglementiert. Bei einer Verringerung seines Gehaltes unter 0,5 Masse-% kann das Speiseeis seine Genuss-Anziehungskraft verlieren, und bei einer Vergrösserung seines Gehaltes über 20 Masse-% wird das Speiseeis übersüss sein; ausserdem kann sich ein hoher Zuckergehalt auf den Zustand des Organismus negativ auswirken (Belastung der Bauchspeicheldrüse).

Das Vorhandensein des Stabilisierungsmittels im Speiseeis ist erforderlich, um Wasser zu binden und dem Speiseeis eine elastische Konsistenz zu verleihen. Bei einer Konzentration des Stabilisierungsmittels in der Mischung unter 0,4 Masse-% wird das Speiseeis einen wässerigen Geschmack mit kleinen Eiskristallen aufweisen.

Bei einer Konzentration des Stabilisierungsmittels über 2,5 Masse-% kann das Speiseeis einen Beigeschmack des Stabilisierungsmittels und eine dicke Konsistenz aufweisen.

Die Verwendung der entrahmten Trockenmilch (von 8 bis 20 Masse-%) ist zum Ausgleich des Speiseeises hinsichtlich des Milcheiweisses vorgesehen. Bei einer Verringerung seiner Konzentration unter 8 % wird das Milcheiweiss nicht ausreichend sein, was die Geschmacksqualität des Speiseeises herabmindern kann. Bei einer Vergrösserung der Konzentration der entrahmten Trockenmilch über 20 Masse-% kann das Speiseeis einen Beigeschmack der Trockenmilch haben, was seinen Genusswert ebenfalls herabsetzt.

Die Vollmilch (von 40 bis 44 Masse-%) wird als Lösungsmittel verwendet und führt Fette in das Speiseeis ein. Bei einem Gehalt an Vollmilch unter 40 Masse-% kann im Fertigprodukt eine unzureichende Fettmenge verzeichnet werden, wodurch der Nährwert des Produktes zurückgeht, während ein Gehalt an Vollmilch über 44 Masse-% die Schmackhaftigkeit des Speiseeises herabsetzen kann.

Die mengenmässige Zusammensetzung des Säureweckers für Joghurt wird durch dessen Verwendungszweck bestimmt, das heisst durch die Herstellung des Sauermilch-Fertigproduktes. Eine Verringerung seines Gehaltes unter 1,0 Masse-% kann die Erreichung des angegebenen Ziels nicht erlauben, während seine Vergrösserung über 4,0 Masse-% die Schmackhaftigkeit des Fertigproduktes beeinträchtigen kann.

Zum besseren Verständnis der vorliegenden Erfindung werden folgende Ausführungsbeispiele derselben angeführt, welche ihren Umfang nicht beschränken.

### Beispiel 1

Eine trockene Mischung zur Zubereitung von Speiseeis erhält man nach einem beliebigen bekannten Verfahren.

Beispeilsweise schüttet man in eine Wanne oder einen beliebigen anderen Behälter Trockenmilch, Zucker, Stabilisierungsmittel, probiotische Mikroorganismen. Die trockene Mischung verrührt man sorgfältig und füllt nach einem beliebigen bekannten Verfahren in Packungen ab, z.B. je 50 Gramm Mischung in jeder Packung.

Die trockene Mischung zur Zubereitung von Speiseeis hat die folgende Zusammensetzung in Masse-%:

| | |
|---|---|
| Stabilisierungsmittel | 0,4 |
| Zucker | 2,5 |
| Bifidumbacterium | 0,01 |
| Trockenmilch | alles übrige. |

Die Zubereitung des Speiseeises für den Verzehr kann unter häuslichen Verhältnissen oder in Stellen der Gemeinschaftsverpflegung bewerkstelligt werden. Der trockenen Mischung des Produktes setzt man 50 Gramm Wasser zu, schlägt sie in einem Mischer, stellt in einen Kühler für 15 bis 20 Sekunden und dann in einen Gefrierschrank z.B. für eine Stunde, wonach das Speiseeis genussfertig ist.

Die Menge von lebensfähigen Bifidobakterien wurde nach der KBE-Methode (Bestimmung der kolonienbildenden Einheiten) nach dem Auftauen des Speiseeises bestimmt.

In 100 Gramm Speiseeis sind 5x10⁴ Bifidobakterien enthalten. Beim Verzehr von 100 Gramm Speiseeis dreimal pro Tag gelangen somit in den menschlichen Organismus im Laufe von zehn Tagen 3x10x5x10⁴ = 150 x 10⁴ = 1,5 x 10⁶ Zellen der Bifidobakterien.

### Beispiel 2

Eine trockene Mischung zur Zubereitung von Speiseeis wird wie in Beispiel 1 beschrieben zubereitet und besitzt die folgende Zusammensetzung in Masse-%:

| | |
|---|---|
| Stabilisierungsmittel | 5,0 |
| Zucker | 0,5 |
| Bifidumbacterium | 2,0 |
| Lb acidophilus | 2,0 |
| Lb casei | 2,0 |
| Lb rhamnosus | 2,0 |
| Ec faecium | 2,0 |
| Trockenmilch | alles übrige. |

Das Speiseeis aus der trockenen Mischung bereitete man wie in Beispiel 1 beschrieben zu. Beurteilung der Menge von lebensfähigen probiotischen Mikroorganismen wurde nach derselben Methode vorgenommen, wie sie in Beispiel 1 beschrieben ist.

In 100 Gramm Speiseeis waren 5x10⁸ probiotische Mikroorganismen enthalten.

Somit gelangt nach dem Verzehr sogar von 10 Gramm Speiseeis eine therapeutische Dosis (1x10⁷) der probiotischen Zellen in den menschlichen Organismus.

### Beispeiel 3

Eine Mischung zur Zubereitung von Speiseeis wurde vor dem Moment der Einbringung probiotischer Mikroorganismen auf einer beliebigen für diese Zwecke geeigneten Ausrüstung wie in Beispiel 1 beschrieben zubereitet.

Beispeielsweise kann die folgende Technologie angewendet werden.

Trockenmilch, Zucker und Stabilisierungsmittel vermischt man in einer Wanne und gibt die gebildete Mischung allmählich unter Rühren der Vollmilch zu, die Milch erwärmt man auf 40 °C. Nach der Auflösung von Trockensubstanzen in der Milch lässt man die Mischung zum Quellen unter ständigem Rühren z.B. während 30 Minuten stehen. Dann leitet man die Mischung durch einen Homogenisator zwecks einer vollständigeren Auflösung und Herstellung einer homogenen Masse der Mischung (beispielsweise bei einem Druck von 160/40 bar). Danach pasteurisiert man die Mischung beispielsweise durch Erwärmung auf 85 °C, kühlt man sie auf die Umgebungstemperatur ab und bringt probiotische Mikroorganismen unter sorgfältigem Rühren ein.

Danach unterzieht man die Mischung in üblicher Weise der Freezerbehandlung, füllt sie portionsweise ab, härtet dann die Portionen z.B. auf minus 35 °C und bewahrt beispielsweise bei einer Temperatur von minus 25 °C auf.

Die Mischung hat die folgende Zusammensetzung in Masse-%:

| | |
|---|---|
| entrahmte Trockenmilch | 8,0 |
| Vollmilch | 44,0 |
| Aspartat | 0,5 |
| Bifidumbacterium | 5,0 |
| Lb acidophilus | 5,0 |
| Stabilisierungsmittel | 0,4 |
| Wasser | alles übrige. |

Vor der Untersuchung der Menge von lebensfähigen Zellen in 100 Gramm Speiseeis wurde dieses bei einer Temperatur von minus 25 °C während eines Monats aufbewahrt.

Die Menge von lebensfähigen Zellen wurde nach der KBE-Methode wie in Beispiel beschrieben beurteilt.

In 100 Gramm Speiseeis waren 10⁸ Zellen der lebensfähigen Zellen Bifidumbacterium und Zellen Lb acidophilus enthalten.

Somit gelangen beim Verzehr von 10 Gramm Speiseeis, das während eines Monats bei der Temperatur minus 25 °C aufbewahrt wurde, 10⁸ probiotische Zellen in den Organismus.

### Beispiel 4

Die Mischung zur Zubereitung von Speiseeis enthält die nachstehenden Komponenten bei deren folgendem Verhältnis in Masse-%:

| | |
|---|---|
| entrahmte Trockenmilch | 20,0 |
| Vollmilch | 30,0 |
| Ec faecium | 0,005 |
| Lb casei | 0,005 |
| Xylit | 20 |
| Stabilisierungsmittel | 5,0 |
| Wasser | alles übrige. |

Das Speiseeis wurde wie in Beispiel 3 beschrieben zubereitet. Die Menge von lebensfähigen Mikroorganismen wurde nach der KBE-Methode untersucht.

In 100 Gramm Speiseeis sind 10⁵ Probiotische Zellen enthalten.

Somit gelangen beim Verzehr von 100 Gramm Speiseeis dreimal pro Tag während 20 Tage 10⁵ x 3 x 20 = 6 x 10⁷ probiotische Mikroorganismen in den menschlichen Organismus.

### Beispiel 5

Die Mischung enthält die nachstehenden Komponenten bei deren folgendem Verhältnis in Masse-%:

| | |
|---|---|
| entrahmte Trockenmilch | 8,0 |
| Vollmilch | 40,0 |
| Lb casei | 0,2 |
| Zucker | 20 |
| Stabilisierungsmittel | 2,5 |
| Säurewecker für Joghurt | 1,0 |
| Wasser | alles übrige. |

Der Prozess der Zubereitung von Speiseeis wurde wie in Beispiel 3 beschrieben bis zur Etappe der Kühlung der Mischung auf die Umgebungstemperatur durchgeführt. Danach wurde der Säurewecker für Joghurt eingeführt und beispielsweise bis zu pH 4,5 während etwa 10 bis 15 Stunden gesäuert und dann probiotische Mikroorganismen eingebracht. Die Freezerbehandlung, Abfüllung, Härtung und Aufbewahrung der Mischung wurden wie in Beispiel 3 beschrieben vorgenommen.

Nach Auftauen einer Speiseeisportion und Bestimmung der Menge von lebensfähigen probiotischen Zellen nach der KBE-Methode hat es sich erwiesen, dass in 100 Gramm Produkt 2 x 10⁶ probiotische Zellen enthalten sind; somit gelangen beim Verzehr von 100 Gramm Speiseeis zweimal pro Tag während 5 Tägen 2 x 10⁶ x 2 x 5 = 2 x 10⁷ Zellen Lb cosei in den menschlichen Organismus.

### Beispiel 6

Die Mischung enthält die nachstehenden Komponenten bei deren folgendem Verhältnis in Masse-%:

| | |
|---|---|
| entrahmte Trockenmilch | 20,0 |
| Vollmilch | 44,0 |
| Ec faecium | 3,4 |
| Xylit | 10 |
| Stabilisierungsmittel | 2,0 |
| Säurewecker für Joghurt | 4,0 |
| Wasser | alles übrige. |

Die Mischung wurde ähnlich wie in Beispiel 5 beschrieben zubereitet. Nach Auftauen des Speiseeises und Bestimmung der Menge von lebensfähigen Zellen Ec faecium wurden in 100 Gramm Produkt 3,4 x 10⁷ genannte Zellen festgestellt.

### Gewerbliche Verwertbarkeit

Die vorliegende Erfindung wird zur Zubereitung von Speiseeis mit einem verschiedenen Fettgehalt (z.B. Milchspeiseeis, Rahmeis, Speiseeis mit kandierten Früchten), mit verschiedenen Aroma- und Frucht-Füllstoffen sowie für gefrorene Säfte effektiv angewendet.

Die Erfindung kann auch in der pharmakologischen Industrie als Abart von Arzneimittelformen probiotischer Mikroorganismen (beispielsweise Bifidobakterien) verwendet werden.

## Patentansprüche

1. Mischung zur Zubereitung von Speiseeis, enthaltend Milchsubstrat, Süßungsmittel, Stabilisierungsmittel und Mikroorganismen,
**dadurch gekennzeichnet,**
**dass** sie als Mikroorganismen probiotische Mikroorganismen in lyophilisierter Form, die im Darm zum Wachsen fähig sind, bei dem folgenden Verhältnis der genannten Komponenten in Masse-% enthält:
| | |
|---|---|
| probiotische Mikroorganismen | von 0,01 bis 10,0 |
| Stabilisierungsmittel | von 0,4 bis 5,0 |
| Süßungsmittel | von 0,5 bis 20,0 |
| Milchsubstrat | alles übrige. |

2. Mischung nach Anspruch 1,
**dadurch gekennzeichnet,**
**dass** sie als genannte probiotische Mikroorganismen die folgenden Gruppen dieser Mikroorganismen enthält:
Laktobazillen azidophilus (Lb acidophilus)
Laktobazillen kasei (Lb casei)
Laktobazillen rhamnosus (Lb rhamnosus)
Enterokokken faekum (EC faecium)
Bifidobakterium (Bifidumbacterium bifidum),
die einzeln oder in Kombination genommen sind.

3. Speiseeis, hergestellt aus den Mischungen gemäß der Ansprüche 1 oder 2.

4. Speiseeis nach Anspruch 3,
**dadurch gekennzeichnet,**
**dass** es zusätzlich einen Säurewecker für Joghurt bei dem folgenden Verhältnis der Komponenten in Masse-% enthält:
| | |
|---|---|
| entrahmte Trockenmilch | von 8,0 bis 20,0 |
| Vollmilch | von 40,0 bis 44,0 |
| Süßungsmittel | von 0,5 bis 20,0 |
| Stabilisierungsmittel | von 0,4 bis 5,0 |
| probiotische Mikroorganismen | von 0,001 bis 3,4 |
| Säurewecker für Joghurt | von 1,0 bis 4,0 |
| Wasser | alles übrige. |

5. Speiseeis nach einem beliebigen der Ansprüche 3, 4,
**dadurch gekennzeichnet,**
**dass** es als genannte probiotische Mikroorganismen die folgenden Gruppen dieser Mikroorganismen enthält:
Laktobazillen azidophilus (Lb acidophilus)
Laktobazillen kasei (Lb casei)
Laktobazillen rhamnosus (Lb rhamnosus)
Enterokokken faekum (Ec faecium)
Bifidobakterium (Bifidumbacterium bifidum),
die einzeln oder in Kombination genommen sind.

## Claims

1. Mixture for the preparation of ice cream, comprising milk base, sweetener, stabiliser and microorganisms,
**characterised in that**
it comprises as microorganisms probiotic microorganisms in lyophilised form, which are capable of growing in the intestine, with the following ratio of the said components in % by weight:
| | |
|---|---|
| probiotic microorganisms | from 0.01 to 10.0 |
| stabiliser | from 0.4 to 5.0 |
| sweetener | from 0.5 to 20.0 |
| milk base | all the remainder. |

2. Mixture according to claim 1,
**characterised in that**
it comprises as said probiotic microorganisms the following groups of such microorganisms:
Lactobacilli acidophilus (Lb acidophilus)
Lactobacilli casei (Lb casei)
Lactobacilli rhamnosus (Lb rhamnosus)
Enterococci faecium (Ec faecium)
Bifidobacterium (Bifidobacterium bifidum),
which are taken separately or in combination.

3. Ice cream prepared from a mixture according to claim 1 or 2.

4. Ice cream according to claim 3,
**characterised in that**
it additionally comprises a yoghurt starter with the following ratio of components in % by weight:
| | |
|---|---|
| dried skimmed milk | from 8.0 to 20.0 |
| whole milk | from 40.0 to 44.0 |
| sweetener | from 0.5 to 20.0 |
| stabiliser | from 0.4 to 5.0 |
| probiotic microorganisms | from 0.001 to 3.4 |
| yoghurt starter | from 1.0 to 4.0 |
| water | all the remainder. |

5. Ice cream according to either one of claims 3 and 4,
**characterised in that**
it comprises as said probiotic microorganisms the following groups of such microorganisms:
Lactobacilli acidophilus (Lb acidophilus)
Lactobacilli casei (Lb casei)
Lactobacilli rhamnosus (Lb rhamnosus)
Enterococci faecium (Ec faecium)
Bifidobacterium (Bifidobacterium bifidum),
which are taken separately or in combination.

## Revendications

1. Mélange destiné à la préparation de glaces ou de crèmes glacées, contenant un substrat de lait, des édulcorants, des stabilisants et des micro-organismes, **caractérisé**
**en ce qu'**il contient, en tant que micro-organismes des micro-organismes probiotiques sous forme lyophilisée, qui sont aptes à se développer dans l'intestin, selon le rapport suivant entre les composants nommés, en pourcentage en masse :
| | |
|---|---|
| Micro-organismes probiotiques | 0,01 à 10,0 |
| Stabilisant(s) | 0,4 à 5,0 |
| Édulcorant(s) | 0,5 à 20,0 |
| Substrat de lait | le reste. |

2. Mélange selon la revendication 1, **caractérisé en ce qu'**il contient, en tant que micro-organismes probiotiques nommés, les groupes suivants de micro-organismes :
lactobacillus acidophilus (Lb acidophilus)
lactobacillus casei (Lb casei)
lactobacillus rhamnosus (Lb rhamnosus)
enterococcus faecium (EC faecium)
bifidobactérie (bifidumbacterium bifidum),
qui sont pris seuls ou en combinaison.

3. Glace ou crème glacée fabriquée à partir de mélanges selon les revendications 1 ou 2.

4. Glace ou crème glacée selon la revendication 3, **caractérisée en ce qu'**elle contient en outre une culture bactérienne d'acide lactique pour yaourt, selon le rapport suivant entre les composants, en pourcentage en masse :
| | |
|---|---|
| Lait sec écrémé | 8,0 à 20,0 |
| Lait entier | 40,0 à 44,0 |
| Édulcorant(s) | 0,5 à 20,0 |
| Stabilisant(s) | 0,4 à 5,0 |
| Microorganismes probiotiques | 0,001 à 3,4 |
| Culture bactérienne d'acide lactique pour yaourt | 1,0 à 4,0 |
| Eau | le reste |

5. Glace ou crème glacée selon l'une quelconque des revendications 3, 4, **caractérisée en ce qu'**elle contient en tant que microorganismes probiotiques les groupes suivants de microorganismes :
lactobacillus acidophilus (Lb acidophilus)
lactobacillus casei (Lb casei)
lactobacillus rhamnosus (Lb rhamnosus)
enterococcus faecium (EC faecium)
bifidobactérie (bifidumbacterium bifidum),
qui sont pris seuls ou en combinaison.
